# EUROPEAN PATENT APPLICATION

(11) **EP 4 783 543 A1**
(43) Date of publication of application: **29.07.2026**
(21) Application number: 25153561.3
(22) Date of filing: 23.01.2025
(51) Int. Cl.: H04L 47/2475

(54) **COMPUTER-IMPLEMENTED METHOD FOR MANAGING NETWORK COMMUNICATION**

(71) Applicant: Airbus S.A.S., 31700 Blagnac (FR)
(72) Inventor: Milheiro Mendes, Paulo-Jorge, 82024 Taufkirchen (DE)
(74) Representative: OTN Airbus SAS

(57) **Abstract**

The invention relates to a computer-implemented method for managing network communication between interconnected network devices (12, 12a, 12b, 12c) in a network system (10).

## Description

The invention relates to a computer-implemented method for managing network communication in a network system. The invention further relates to a network system, a network device, a computer program, and a computer-readable data carrier.

There has been a lot of interest nowadays in the extended-reality (XR) services and its potential. With the emergence of extended reality and tactile internet technology, the demand for low-latency transmission and throughput increment has increased. However, a large deployment of such services may need a seamless integration in the current internet architecture. This means, that XR applications may need a suitable middleware to interface with existing internet transport protocols, for example with QUIC [1]. Such integration means that users can have an XR experience in any device where a lightweight client application, an "XR browser", can run on top of a regular internet protocol stack to connect to the appropriate server.

Studies on the low-latency transmission of web content in transport and application layers have been proposed using SPDY [5] and QUIC. SPDY, an application layer protocol, uses multiplexing, header compression, and server push to minimize the web page load time. The proposed features were included in the HTTP/2 standard, but SPDY support was phased out in 2016. The QUIC protocol is a novel transport layer protocol recently standardized by the Internet Engineering Task Force (IETF). For reduced transmission latency, QUIC employs 0-RTT to reduce the connection establishment time, multiple streams within a connection to avoid head-of-line (HOL) blocking from sequential TCP delivery, and a new packet number to eliminate retransmission ambiguity. Hence, for network-based services demanding an immediate response, the QUIC protocol is often used to provide low-latency service.

The QUIC protocol has flexible congestion control and at the same time possesses the advantages of high efficiency, low latency, and easy deployment at the application layer. At present, CUBIC [6] is still the default congestion control in QUIC implementations, but BBR [7] is also an optional congestion control in QUIC. CUBIC is a less aggressive and more systematic derivative of TCP, in which the window size is a cubic function of time since the last congestion event, with the inflection point set to the window size prior to the event. On the other side, BBR uses a feedback-driven autonomous adjustment mechanism to keep the initial value of the congestion window consistent with the capacity of the network so that the network maintains a state of high throughput and low latency. BBR does not use packet loss events as a signal of congestion. However, BBR may also have some limitations, mainly when operating in transmission links with high latency and bandwidth. In these scenarios the characteristics related to the BBR pacing rate and RTT may cause excessive data transmission rate during the transmission process, resulting in packet loss that may seriously affects the quality and efficiency of the transmission. Moreover, in a multi-user scenario, the network delay may be variable due to multiple concurrent data senders in the same network.

The usage of different congestion control mechanisms by different applications (QUIC installation) may lead to dependencies from existing network configurations. For instance, the queue size should be roughly 1,5 times the bandwidth-delay product for one BBR flow to be fair to one CUBIC flow [8]. Hence, since the existing congestion control mechanisms that can be used by QUIC, may not be fully efficient to avoid congestion, there may be the need to have a middleware to allow applications to have a better control of the quality of their services when transmitting data over QUIC.

Reference is made herein to the following literature:
[1] lyengar, J., Ed. and M. Thomson, Ed., "QUIC: A UDP-Based Multiplexed and Secure Transport", RFC 9000, DOI 10.17487/RFC9000, May 2022;
[2] W3C, "WebXR Device API", W3C Candidate Recommendation Draft, 5 October 2023;
[3] H. Schulzrinne, S. Casner, R. Frederick, V. Jacobson, "RTP: A Transport Protocol for Real-Time Applications", IETF RFC 3550, July 2003;
[4] M. Kühlewind, B. Trammell, "Applicability of the QUIC Transport Protocol', IETF RFC 9308, September 2022;
[5] HeeJung Kim, GyuSun Yi, HanNa Lim, JiCheol Lee, BeomSik Bae & SungWon Lee, "Performance Analysis of SPDY Protocol in Wired and Mobile Networks", Springer Lecture Notes in Electrical Engineering book series (LNEE, volume 280), 2014;
[6] L. Xu, S. Ha, I. Rhee, V. Goel, L. Eggert, "CUBIC for Fast and Long-Distance Networks", IETF RFC 9438, August 2023;
[7] Mario Hock; Roland Bless; Martina Zitterbart, "Experimental evaluation of BBR congestion control", in Proc of IEEE Conference on Network Protocols, October 2017;
[8] Rune Johan Borgli, Joakim Misund, "Comparing BBR and CUBIC Congestion Controls", Technical Report, University of Oslo; and
[9] I. Fette, A. Melnikov, "The WebSocket Protocol", IETF RFC 6455, December 2011.

The object of the invention is to provide an improved method for managing network communication in a network system.

To achieve this object, the invention provides a computer-implemented method according to claim 1. A network system, a network device, a computer program, and a computer-readable data carrier are subject-matter of the parallel claims. Advantageous embodiments of the invention are subject-matter of the dependent claims.

In one aspect, the invention provides a computer-implemented method for managing network communication between interconnected network devices in a network system, the method comprising:
a) Receiving, from an application of a first network device in the network system, a request for network communication of application data related to a plurality of data objects;
b) Classifying, based on a correlation map, the data objects into one or more data sets, each data set including one or more data objects, wherein data objects from different data sets are classified uncorrelated; and
c) Establishing, for each data set, a corresponding network connection for network communication between the first network device and at least one second network device in the network system, said at least one second network device providing application data related to the respective data set, for receiving, by the first network device, said application data from the at least one second network device.

Preferably, the at least one data set includes a plurality of data objects that are classified correlated.

Preferably, the method further comprises:
d1) Determining, for the plurality of data objects, a corresponding object priority level, the object priority level being indicative of a relevance of the application data related to the respective data object;
d2) Establishing the one or more network connections with one or more corresponding connection streams according to the one or more object priority levels of the one or more corresponding data objects; and
d3) Managing the one or more network connections internally based on the one or more corresponding object priority levels.

Preferably, the method further comprises:
e1) Assigning, to each network connection between the first network device and any second network device, a corresponding connection quality level, the connection quality level being indicative of a requirement and/or constraint of the respective network connection; and
e2) Managing the one or more network connections holistically based on the one or more connection quality levels.

Preferably, steps e1) and e2) further comprise:
e1.1) Detecting a communication congestion of at least one network connection; and, based on the one or more connection quality levels:
e2.1) Cancelling at least one network connection; and/or
e2.2) Establishing at least one network connection between the first network device and an alternative second network device.

Preferably, the method further comprises:
f1) Detecting a communication congestion of at least one network connection;
f2) Reclassifying, based on the communication congestion, the data objects according to step b); and
f3) Performing step c) based on the reclassified data objects.

Preferably, step c) further comprise one or both of the following:
c1) Establishing, for at least two data sets, corresponding network connections between the first network device and at least two different second network devices, said different second network devices respectively providing corresponding application data; and/or
c2) Establishing one or more network connections between at least two different second network devices, one or both of said different second network devices providing joint application data.

Preferably, the application data includes in step a) the plurality of data objects and/or in step c) the one or more corresponding data objects.

Preferably, the correlation map correlates and/or uncorrelates the plurality of data objects based on one or both of the following:
- the application; and/or
- one or more layers, frames, and/or any other nature related to the application data and/or the data objects.

In another aspect, the invention provides a network system comprising means for carrying out the method according to any of the preceding embodiments.

Any feature, aspect, and/or advantage that is described herein with respect to embodiments of the network system may optionally apply to embodiments of the method, and vice versa.

In another aspect, the invention provides a network device, adapted for the network system according to any of the preceding embodiments.

Any feature, aspect, and/or advantage that is described herein with respect to embodiments of the network device may optionally apply to embodiments of the method and/or the network system, and vice versa.

In another aspect, the invention provides a computer program which, when the program is executed by a network device in a network system, cause the network device or the network system respectively, to carry out the method of any of the preceding embodiments.

Any feature, aspect, and/or advantage that is described herein with respect to embodiments of the computer program may optionally apply to embodiments of the method, the network system, and/or the network device, and vice versa.

In another aspect, the invention provides a computer-readable data carrier having stored thereon the computer program.

Any feature, aspect, and/or advantage that is described herein with respect to embodiments of the computer-readable data carrier may optionally apply to embodiments of the method, the network system, the network device, and/or the computer program, and vice versa.

Embodiments of the invention preferably have the following advantages and effects:
The capability of the web to support XR rendering has been developed based on WebXR [2], which is a set of JavaScript libraries that communicate with a web browser to interact with any hardware that the device might have attached to.

However, a WebXR application may be more a JavaScript application that can be downloaded from a web page, than an application related to three-dimensional uniform resource identifiers (URI). Since HTML and HTTP were not developed for spatial computing, but to deliver webpages, and static, or marginally dynamic content, there may be a need to develop an application-layer protocol for XR, preferably with one, several, or all of the following characteristics:
- real-time two-way client-server protocol, similar to RTP [3];
- capability of transporting different types of information such as three-dimensional geometry, two-dimensional textures, spatial audio, and/or video;
- most of the application logic should be processed at the server, while latency sensitive logic may run at the client or edge; and/or
- the final rendering and compositing should occur at the client or at the edge.

Such an application should run on top of an internet protocol stack. Due to their latency, sensitive nature, XR applications may benefit from the QUIC transport protocol, whose stream multiplexing capabilities allows applications to run multiple streams over a single connection, without head-of-line blocking between streams. Stream data is carried within frames, where one QUIC packet on the wire can carry one or multiple stream frames [4].

QUIC has an interface that exposes multiple streams to the application allowing it to send data over different streams. However, the application usually cannot control how data transmitted over one stream is mapped into frames or how those frames are bundled into packets. Hence, it may be necessary to develop a mechanism that allows applications to explore the QUIC characteristics to fulfil the quality levels of every different type of information used in XR applications.

Moreover, since stream information is carried inside QUIC encrypted payload, no information about the stream(s) may be visible to the network. This means that stream multiplexing may not intended to be used for differentiating streams in terms of network treatment: all streams that are multiplexed over the same QUIC connection may require the same network treatment. If differential network treatment is desired, multiple QUIC connections to the same server might be used. Therefore, it would be useful to have a mechanism that allows applications to inform the network about the need to provide different treatment to different QUIC connections.

Hence, preferred embodiments of the invention describe a mechanism to control the quality of XR Services over QUIC, by preferably mapping the different types of information used by XR applications to different streams, which can belong to the same or different QUIC connections, each of which may be marked with a different quality code embedded in its connection identifier (ID). The proposed mechanism preferably can manage existing QUIC connections by redirecting them between a cloud and an edge server to support low latency information types.

Preferred embodiments define a mechanism to be installed in between an application and a transport protocol. This means, that preferred embodiments can be seen as a middleware to be installed in the server and/or the end-user side. This middleware may be on top of transport protocols that are able to set up and manage connections, each of which can have several data streams, as is the case of QUIC, for example.

The proposed mechanism preferably aims to manage the way different information objects (e.g., scalable video, XR data) is transmitted over the above-mentioned transport protocol. The proposed mechanism preferably is able of one or both of the following:
- Mapping different types of information (e.g., different video layers or different XR information such as pose and hand tracking) to different transport streams, each of which may be assigned a different transmission priority, based on the quality level required by the different information objects; and/or
- Controlling the quality of the end-to-end transmission by modifying the priority of each stream, removing less priority streams or redirecting the transport connection to an edge device closer to the user.

The mapping may be done into: i) different streams inside the same transport connection; ii) different, but correlated, transport connections to the same network device; and/or iii) different transport connections to different network devices. Different network devices may be involved in the execution of a highly demanding application, since a common approach to reduce latency may be to deploy computational functions closer to the user, at the edges of a network.

In comparison with other approaches that aim to control the quality of highly demanding applications, preferred embodiments of the invention have one, several, or all of the following benefits:
- coordinating the distribution of computational functions between the application, the cloud, and the edge server;
- providing more efficient transport than traditional techniques like WebSocket [9], being capable of mapping application information into transport streams, preferably reducing the overhead of establishing new connections, and so resulting in better resource utilization;
- coordinating multiplexing and stream prioritization, aiming to help the application to adapt to changing network conditions by adjusting the prioritization of the different information objects used by the application; and/or
- redirecting transport connections to nearby servers (edge computing) in case of extreme congestion, for example.

In detail, preferred embodiments of the invention describe a mechanism to allow an application of a highly demanding service (e.g., extended reality) to set up and coordinate several simultaneous transport connections between a set of different network devices, such as a closer edge device and a faraway cloud device.

The operation of the proposed middleware preferably has two phases, service initiation and service execution, as described below.

### 1. Service initiation

The proposed middleware preferably allows servers to be aware about potential edge devices deployed near the end-users and that can be used to migrate current transport sessions.

This operation may be done based on the following:
- middleware from the end-user side gets the IP address of the local edge device during the DHCP [REF] operation.
- middleware from the end-user side sends that information to the middleware on the server side during the initiation of the transport session, for example, by including that information in the header extension of the long QUIC packets used for session setup.

The information about edge devices may be used by the middleware to coordinate the distribution of the computational functions used by the application running in the end-user device and by the service deployed in the cloud. For this, the middleware may receive from the application and the server, a list of computational functions.

The distribution of computational functions may be done as follows:
- The energy consumption of the computational functions installed in the local device as well as the power status of the device may be considered by the middleware installed in the local device to request the migration of some functions (e.g. object tracking, map optimization, localization) to the local edge;
- Computational functions that are installed in the cloud, but that may require very low delay (e.g. video rendering, generating Universal Scene Descriptions with Al) may be requested by the middleware installed in the server to be migrated to the edge during the service setup;
- Computational functions that do not require very low delay or may be dependent from real-time information only available on the cloud, may be kept in the cloud. Such cloud based computational functions may be of two nature: i) the ones that have some delay restrictions (e.g., video streaming); and/or ii) the ones that have no such restrictions (e.g., contextual data).

The preferred mechanism used to migrate software modules (e.g., video rendering) from one place (e.g., the cloud) to another (e.g., the edge) may be supported by existing technology such as Kubernetes.

### 2. Service execution

The preferred execution of services may encompass different steps such as mapping of information objects to transport connections and streams; prioritization of connections and streams; and/or adapting to congestion.

The first preferred set of steps aim to allow the middleware to gather information from the application related to the information objects, and their quality levels, encompassed in the flow started by the application. After that, the preferred middleware may start by identifying the information objects that are correlated (e.g., different layers of scalable video).

The next preferred set of steps aim to map the information used by the application flow into transport connections and streams based on the properties of the different information types. For this, the middleware may need to start by opening as many QUIC connections as the set of identified uncorrelated information objects and to identify which of the information objects require the network to enforce some quality-of-service related treatment, such as priority forwarding or reservation of resources.

To allow network equipment (e.g., routers) to treat unrelated information based on their different quality requirements, the preferred middleware may map unrelated information (e.g., hand tracking, head pose, spatial audio) to different connections marked with different levels of quality by using the first two bits of the "ConnectionlD" (of QUIC, for example):
- Connections without constraints may have a "ConnectionlD" starting with "00";
- Connections with throughput constraints may have a "ConnectionlD" starting with "01";
- Connections with delay constraints may have a "ConnectionlD" starting with "10"; and/or
- Connections with delay and throughput constraints may have a "ConnectionlD" starting with "11".

By parsing the first two bits of the "ConnectionlD," network devices preferably can queue connections with a delay constraint in higher priority queues.

Transmission of interdependent information, such as hierarchical video layers may be handled by mapping each of them into different QUIC streams of the same connection. Stream mapping is preferably coordinating as follows:
- Information with high priority (e.g., I-frames of a video stream) are mapped to a stream with an indication that frames from this stream should be transmitted first or with high priority; and/or
- Information with low priority (e.g., P-frames and B-frames of a video stream) are mapped to a stream with an indication that frames from this stream may be transmitted later or with lower priority; and/or
- If different information types need to be transmitted following a specific pattern, the preferred middleware may inform the transport protocol about the delay to use before bundling frames of different flow streams into a packet.

The preferred stream prioritization may be used to deliver the most important information during congestion, meaning that in the presence of congestion, the transport protocol should assign higher data rates to streams with higher priority order. Since QUIC supports stream prioritization, but may not standardize any mechanisms, the implementation of the middleware stream prioritization scheme may communicate with the QUIC transport layer via an application programming interface (API) to set the priority of each stream.

In a congestion situation, lower priority streams may be assigned less transmission opportunities. Since such streams keep consuming resources, the preferred middleware may decide to stop them to adapt to an increased congestion.

In the presence of a high congestion, the proposed middleware may be able to redirect previously established connections to a different machine (different IP address), for example, based on the results of the congestion control used by QUIC, such as packet loss (CUBIC) or feedback based (BBR). Based on the definition of connections in QUIC, this preferred redirection is possible to be done in a seamless manner. The redirection mechanism can be used to move a connection from a cloud service to a service installed in a local edge, to overcome intermittent quality of the networking path towards the cloud. By default, the preferred middleware may redirect to a local edge device connections that have a "ConnectionlD" starting with "1X" denoting traffic with delay constraints related to information objects that were previously deployed in the edge.

For instance, in the case of XR applications, the preferred middleware on the end-user side may keep using a connection to the cloud server to transmit hand tracking information, while it may redirect the connection used to transport head pose information to the local edge. As a result (lack of information about head pose), the cloud server may send the information about the aggregated state of users to the edge (it received the edge IP address before). The edge may use the information received from the cloud server, together with the pose information received from the end-user, to render the video and send it back to the end-user.

Embodiments of the invention are now explained in more detail with reference to the accompanying drawings of which
- Fig. 1: shows an embodiment of a network system;
- Fig. 2: shows an embodiment of a computer-implemented method for managing network communication between network devices of the network system;
- Fig. 3: illustrates an embodiment of steps S11 and S12 of the method;
- Fig. 4: illustrates an embodiment of steps S13 of the method;
- Fig. 5: illustrates an embodiment of a step S14 of the method;
- Fig. 6: illustrates an embodiment of a step S16 of the method; and
- Fig. 7: illustrates an embodiment of a step S17 of the method.

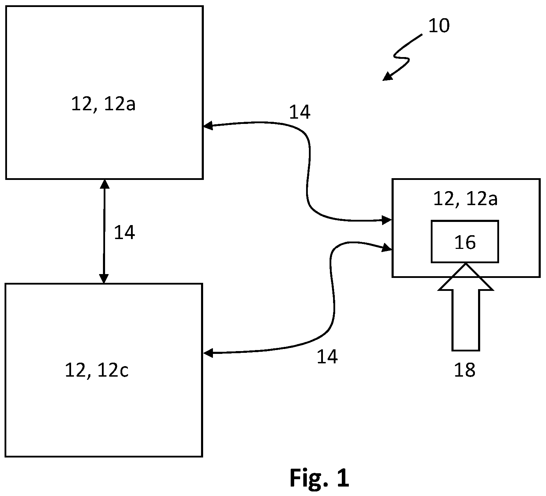

Fig. 1 shows an embodiment of a network system 10.

The network system 10 includes a plurality of network devices 12. The network devices 12 are interconnected such that each network device 12 is directly and/or indirectly connected via network connections 14 for network communication with at least another network device 12. The network connections 14 may be, respectively, unidirectional and/or bidirectional. The network connections 14 may further be encrypted, for example, end-to-end encrypted, respectively.

In the present case, the network system 10 includes a first network device 12a, a second network device 12b, and a third network device 12c. The first network device 12a may be connected with the second network device 12b and the third network device 12c. The second network device 12b may be connected with the third network device 12c.

The first network device 12a may be configured, for example, as a client device. The first network device 12a includes an application 16, for example, an extended reality application and/or a streaming application, such as a video, audio, and/or live streaming application. Other applications are possible within the scope of the invention. For execution, the application 16 expects suitable application data 18 that are broadcasted within the network system 10 from one or more server devices. Therefore, the second network device 12b and/or the third network device 12c may be configured as a server device.

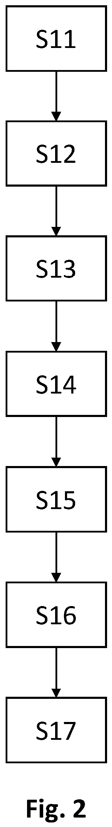

Fig. 2 shows an embodiment of a computer-implemented method for managing network communication between the network devices 12, 12a, 12b, 12c of the network system 10.

In a step S11, the method includes:
- Receiving, from the application 16 of the first network device 12a in the network system 10, a request for network communication of the application data 18 related to a plurality of data objects 20.

In a step S12, the method includes:
- Classifying, based on a correlation map 22, the data objects 20 into one or more data sets 24, each data set 24 including one or more data objects 20, wherein data objects 20 from different data sets 24 are classified uncorrelated.

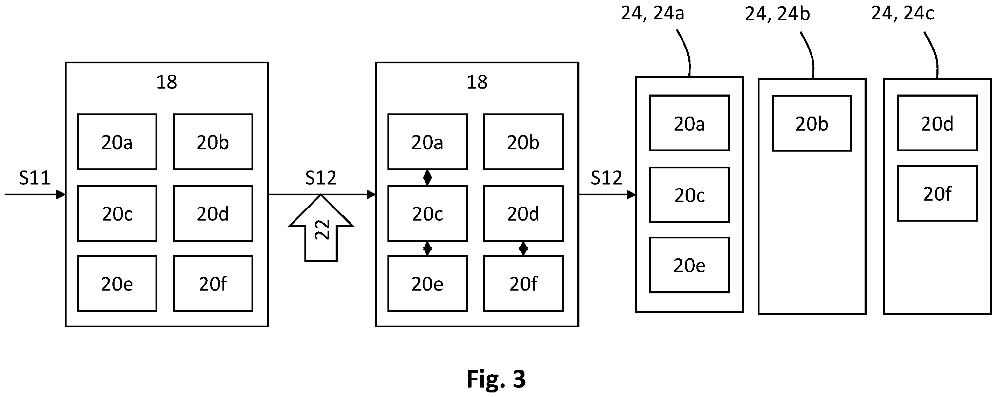

Fig. 3 illustrates an embodiment of the steps S11 and S12.

Preferably, the request for network communication is received by the first network device 12a. For example, the request for network communication may be received from a middleware of the first network device 12a. However, in some embodiments, the request for network communication may be received from another network device 12, such as the second network device 12b and/or the third network device 12c.

The application data 18 is based on and/or relates to a plurality of data objects 20. In the present case, the application data 18 includes a first to a sixth data object 20a-f. Each data object 20, 20a-f may include, for example, one or more layers and/or frames, respectively. For example, the first data object 20a may include one or more I-frames of a video stream. The second data object 20b may include one or more P-frames and/or B-frames of the video stream. The third data object 20c may include one or more audio streams, etc.

The plurality of data objects 20, 20a-f may be correlated and/or uncorrelated data objects 20, 20a-f. In this context, two data objects 20, 20a-f may be considered as "correlated" when any nature of the application data 18 related to the data objects 20, 20a-f and/or of the data objects 20, 20a-f, such as a type, a size, a dimensionality, an energy consumption, and/or a content, is intertwined with, corresponds to, and/or depends on one-sided or bilaterally from each other with respect to the application 16, the application data 18, and/or the execution thereof.

For example, for executing application data 18 based on the first data object 20a by the application 16, application data 18 based on the third data object 20c may be required as well. For executing application data 18 based on the third data object 20c by the application 16, application data 18 based on the fifth data object 20e may be required as well, etc.

Thus, according to Fig. 3, the first data object 20a, the third data object 20c, and the fifth data object 20e are correlated. The second data object 20b is not correlated with any other data object 20. The fourth data object 20d and the sixth data object 20f are correlated again.

According to step S12, the data objects 20, 20a-f are classified into one or more data sets 24, based on the correlation map 22. The correlation map 22 may depend on the application 16 and/or the application data 18. For example, for video streaming, the correlation map 22 may be different than for audio streaming.

In the present case, the first data object 20a, the third data object 20c, and the fifth data object 20e may be classified into a first data set 24a. The second data object 20b may be classified into a second data set 24b. The fourth data object 20d and the sixth data object 20f may be classified into a third data set 24c. Data objects 20 from different data sets 24, 24a, 24b, 24c are classified uncorrelated. However, in some embodiments, a data set 24 may also include uncorrelated data objects 20.

Reference is made again to Fig. 2.

In a step S13, the method includes:
- Establishing, for each data set 24, 24a, 24b, 24c, a corresponding network connection 14 for network communication between the first network device 12a and at least one second network device 12b, 12c in the network system 10, said at least one second network device 12b, 12c providing application data 18 related to the respective data set 24, 24a, 24b, 24c, for receiving, by the first network device 12a, said application data 18 from the at least one second network device 12b, 12c.

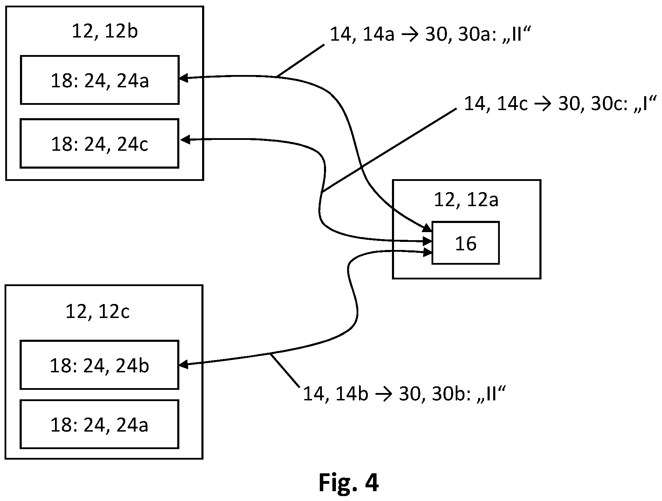

Fig. 4 illustrates an embodiment of the step S13.

In the network system 10, the second network device 12, 12b may provide application data 18 related to the first data set 24a and the third data set 24c. The third network device 12, 12c may provide application data 18 related to the first data set 24a and the second data set 24b.

According to step S13, for each data set 24, 24a, 24b, 24c, a corresponding network connection 14 for network connection is established. For example, a first network connection 14a may be established between the first network device 12a and the second network device 12b for receiving, by the first network device 12a, the application data 18 related to the first data set 24a. A second network connection 14b may be established between the first network device 12a and the second network device 12b for receiving, by the first network device 12a, the application data 18 related to the third data set 24c. A third network connection 14c may be established between the first network device 12a and the third network device 12c for receiving, by the first network device 12a, the application data 18 related to the second data set 24b.

Reference is made again to Fig. 2.

In a step S14, the method includes:
- Determining, for the plurality of data objects 20, 20a-f, a corresponding object priority level 26, the object priority level 26 being indicative of a relevance of the application data 18 related to the respective data object 20, 20a-f;
- Establishing the one or more network connections 14, 14a, 14b, 14c with one or more corresponding connection streams 28 according to the one or more object priority levels 26 of the one or more corresponding data objects 20, 20a-f; and
- Managing the one or more network connections 14, 14a, 14b, 14c internally based on the one or more corresponding object priority levels 26.

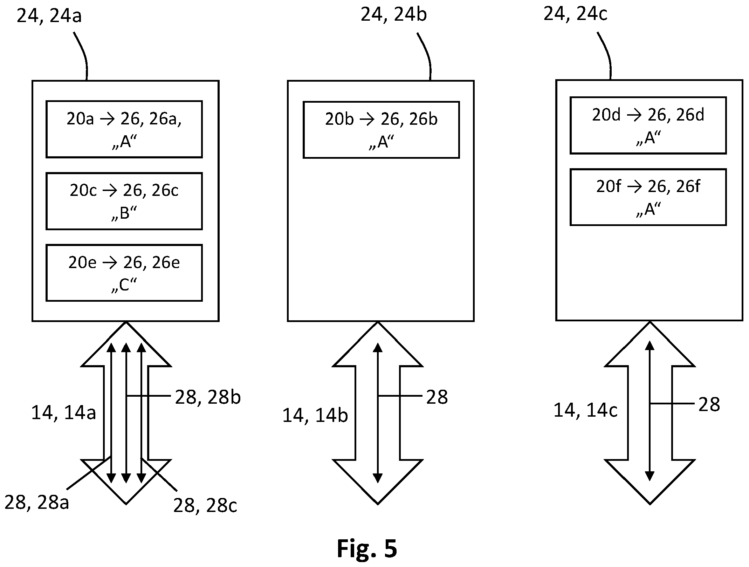

Fig. 5 illustrates an embodiment of the step S14.

The one or more object priority levels 26 are preferably assigned based on the application 16, the application data 18, the correlation map 22, and/or the nature of the application data 18 and/or the respective data object 20, 20a-f.

According to step S14, first to sixth object priority levels 26, 26a-f are assigned to the first to sixth data objects 20, 20a-f. In the present case, the object priority levels 26, 26a-f include the levels "A", "B", and "C". However, any other scale of object priority levels 26 may be possible.

The first object priority level 26a may be "A", the third object priority level 26c may be "B", and the fifth object priority level 26e may be "C". Accordingly, the first network connection 14a includes a first connection stream 28a related to the level "A", a second connection stream 28b related to the level "B", and a third connection stream 28c related to level "C".

The second object priority level 26b may be "A". Accordingly, the second network connection 14b includes a single connection stream 28. The fourth object priority level 26d may be "A" and the sixth object priority level 26f may be "A" as well. Accordingly, the third network connection 14c includes a single connection stream 28.

The network connections 14, 14a, 14b, 14c may be internally managed based on the one or more corresponding object priority levels 26, 26a-f. For example, the first connection stream 28a of the first network connection 14a may be prioritized over the second connection stream 28b of the first network connection 14a; the second connection stream 28b of the first network connection 14a may be prioritized over the third connection stream 28c. The prioritizing may be based, for example, on a throughput, a delay, and/or other criteria.

Reference is now made to Fig. 2 and 4.

In a step S15, the method includes:
- Assigning, to each network connection 14, 14a, 14b, 14c, a corresponding connection quality level 30, the connection quality level 30 being indicative of a requirement and/or constraint of the respective network connection 14a, 14a, 14b, 14c; and
- Managing the one or more network connections holistically based on the one or more connection quality levels 30.

The one or more connection quality levels 30 are preferably assigned based on the application 16, the application data 18, the correlation map 22, and/or the one the one or more object priority levels 26, 26a-f of the one or more corresponding data objects 20, 20a-f.

According to step S15, first to third connection quality levels 30, 30a, 30b, 30c are assigned to the first to third network connections 14, 14a, 14b, 14c. In the present case, the connection quality levels 30, 30a, 30b, 30c include the levels "I" and "II". However, any other scale of connection quality levels 30 may be possible.

The first connection quality level 30a may be "II", the second connection quality level 30b may be "II", and the third connection quality level 30c may be "I". The network connections 14, 14a, 14b, 14c may be holistically managed based on the first to third connection quality levels 30a, 30b, 30c. For example, the third network connection 14c may be prioritized over the first network connection 14a and/or the second network connection 14b. The prioritizing may be based, for example, on the throughput, the delay, and/or other criteria.

Reference is made again to Fig. 2.

In a step S16, the method includes:
- Detecting a communication congestion 32 of at least one network connection 14, 14a, 14b, 14c; and:
- Cancelling at least one network connection 14, 14a, 14b, 14c and establishing at least one network connection 14 between the first network device 12a and an alternative second network device 12, based on the one or more connection quality levels 30, 30a, 30b, 30c.

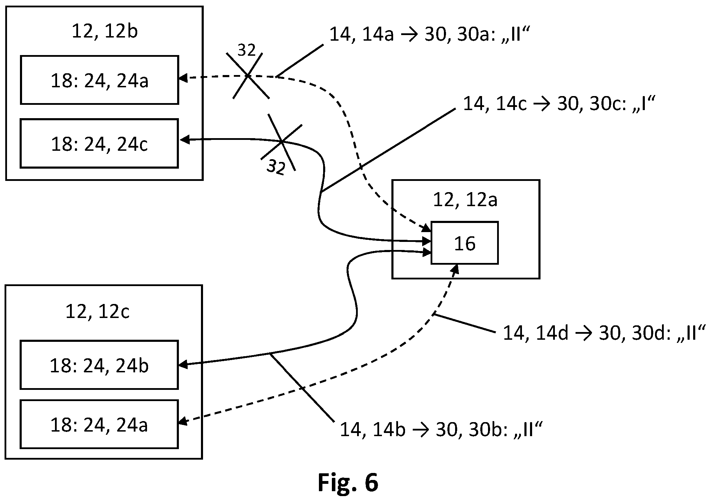

Fig. 6 illustrates an embodiment of the step S16.

In the present case, the communication congestion 32 may concern the first network connection 14a and the third network connection 14c. In other words, the communication congestion 32 may be located between the first network device 12a and the second network device 12b. Thus, one or both of the first network connection 14a and the third network connection 14c may be cancelled. However, according to Fig. 6, the third connection quality level 30c is "I", while the first connection quality level is "II". Thus, the third network connection 14c may be prioritized over the first network connection 14a. In consequence, only the first network connection 14a may be cancelled according to step S16. Cancelling the first network connection 14a may resolve the communication congestion 32 concerning the third network connection 14c.

As can be inferred from Fig. 6, the third network device 12c may provide application data 18 related to the first data set 24a as well. In others words, the third network device 12c can be considered as an alternative second network device 12 with respect to the first data set 24a. Thus, as an alternative for the first network connection 14a, a fourth network connection 14d may - not necessarily additional to the cancelling - be established between the first network device 12a and the third network device 12c with a fourth connection quality level 30d. In other words, the first network connection 14a may be redirected to the third network device 12c. Redirecting may also involve to establish new (one or more) corresponding connection streams 28 and/or assigning new (one or more) connection quality levels 30.

Additionally, or alternatively, the one or more data objects 20, 20a-f, may be reclassified, for example, based on the correlation map 22 and/or an alternative correlation map 22. In the present case, the data objects 20, 20a-f of the first data set 24a and the second data set 24b may be reclassified into a single, two, or even more than two data sets 24. Reclassification may also involve to establish a new (one or more) network communications 14 with/without new (one or more) corresponding connection streams 28 and/or assigning new (one or more) connection quality levels 30.

Reference is made again to Fig. 2.

In a step S17, the method includes:
- Detecting a communication congestion 32 of at least one network connection 14, 14a, 14b, 14c, and based on the one or more connection quality levels 30, 30a, 30b, 30c:
- Cancelling at least one network connection 14, 14a, 14b, 14c and establishing at least one network connection 14 between the first network device 12a and an alternative second network device 12; and
- Establishing one or more network connections 14 between at least two different second network devices 12b, 12c, one or both of said different second network devices 12b, 12c providing joint application data 34.

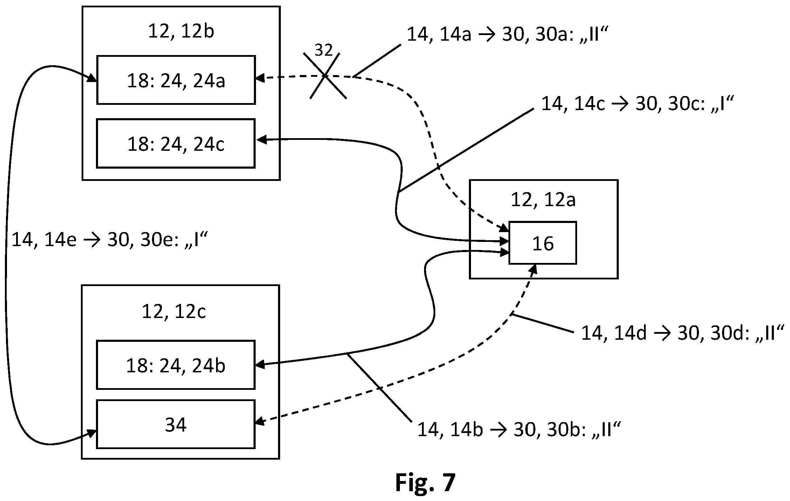

Fig. 7 illustrates an embodiment of the step S17.

In contrast to the case as shown with reference to Fig. 6, the third network device 12c may not be able to provide application data 18 related to the first data set 24a. Thus, a fifth network connection 14e may be established between the second network device 12b and the third network device 12c. For the fifth network connection 14e, a fifth connection quality level 30e may be assigned and it may be managed accordingly. The fifth network connection 14e may further include one or more corresponding connection streams 28, for example, after reclassification. These one or more corresponding connection streams 28 may then be managed accordingly. In other words, the third network device 12c may provide joint application data 34 related to the first data set 24a.

Any network connection 14 for providing joint application data 34 may, however, be established without the need for detecting the communication congestion 32 and/or cancelling another network connection 14.

The invention further provides the network system 10 comprising means for carrying out the described method and the network device 12, 12a, 12b, 12c, adapted for said network system 10. The invention further provides a computer program (not shown) which, when the program is executed by a network device 12, 12a, 12b, 12c in a network system 10, cause the network device 12, 12a, 12b, 12c or the network system 10 respectively, to carry out the described method. The invention further provides a computer-readable data carrier (not shown) having stored thereon the computer program.

### List of reference signs:

- 10: network system
- 12: network device
- 12a: first network device
- 12b: second network device
- 12c: third network device
- 14: network connection
- 14a: first network connection
- 14b: second network connection
- 14c: third network connection
- 14d: fourth network connection
- 14e: fifth network connection
- 16: application
- 18: application data
- 20: data object
- 20a: first data object
- 20b: second data object
- 20c: third data object
- 20d: fourth data object
- 20e: fifth data object
- 20f: sixth data object
- 22: correlation map
- 24: data set
- 24a: first data set
- 24b: second data set
- 24c: third data set
- 26: object priority level
- 26a: first object priority level
- 26b: second object priority level
- 26c: third object priority level
- 26d: fourth object priority level
- 26e: fifth object priority level
- 26f: sixth object priority level
- 28: connection stream
- 28a: first connection stream
- 28b: second connection stream
- 28c: third connection stream
- 30: connection quality level
- 30a: first connection quality level
- 30b: second connection quality level
- 30c: third connection quality level
- 30d: fourth connection quality level
- 30e: fifth connection quality level
- 32: communication congestion
- 34: joint application data

## Claims

1. A computer-implemented method for managing network communication between interconnected network devices (12, 12a, 12b, 12c) in a network system (10), the method comprising:
a) Receiving, from an application (16) of a first network device (12, 12a) in the network system (10), a request for network communication of application data (18) related to a plurality of data objects (20, 20a-f);
b) Classifying, based on a correlation map (22), the data objects (20, 20a-f) into one or more data sets (24, 24a, 24b, 24c) , each data set (24, 24a, 24b, 24c) including one or more data objects (20, 20a-f), wherein data objects (20, 20a-f) from different data (24, 24a, 24b, 24c) sets are classified uncorrelated; and
c) Establishing, for each data set (24, 24a, 24b, 24c), a corresponding network connection (14, 14a-d) for network communication between the first network device (12, 12a) and at least one second network device (12, 12b, 12c) in the network system (10), said at least one second network device (12, 12b, 12c) providing application data (18) related to the respective data set (24, 24a, 24b, 24c), for receiving, by the first network device (12, 12a), said application data (18) from the at least one second network device (12, 12b, 12c).

2. The method according to claim 1, wherein at least one data set (24, 24a, 24b, 24c) includes a plurality of data objects (20, 20a-f) that are classified correlated.

3. The method according to any of the preceding claims, further comprising:
d1) Determining, for the plurality of data objects (20, 20a-f), a corresponding object priority level (26, 26a-f), the object priority level (26, 26a-f) being indicative of a relevance of the application data (18) related to the respective data object (20, 20a-f);
d2) Establishing the one or more network connections (14, 14a-e) with one or more corresponding connection streams (28, 28a, 28b, 28c) according to the one or more object priority levels (26, 26a-f) of the one or more corresponding data objects (26, 26a-f);
d3) Managing the one or more network connections (14, 14a-e) internally based on the one or more corresponding object priority levels (26, 26a-f).

4. The method according to any of the preceding claims, further comprising:
e1) Assigning, to each network connection (14, 14a-d) between the first network device (12, 12a) and any second network device (12, 12b, 12c), a corresponding connection quality level (30, 30a-d), the connection quality level (30, 30a-d) being indicative of a requirement and/or constraint of the respective network connection (14, 14a-d); and
e2) Managing the one or more network connections (14, 14a-d) holistically based on the one or more connection quality levels (30, 30a-d).

5. The method according to claim 4, wherein steps e1) and e2) further comprise:
e1.1) Detecting a communication congestion (32) of at least one network connection (14, 14a-e); and, based on the one or more connection quality levels (30, 30a-e):
e2.1) Cancelling at least one network connection (14, 14a-e); and/or
e2.2) Establishing at least one network connection (14, 14a-d) between the first network device (12, 12a) and an alternative second network device (12, 12b, 12c).

6. The method according to any of the preceding claims, further comprising:
f1) Detecting a communication congestion (32) of at least one network connection (14, 14a-e);
f2) Reclassifying, based on the communication congestion (32), the data objects (20, 20a-f) according to step b); and
f3) Performing step c) based on the reclassified data objects (20, 20a-f).

7. The method according to any of the preceding claims, wherein step c) further comprise one or both of the following:
c1) Establishing, for at least two data sets (24, 24a, 24b, 24c), corresponding network connections (14, 14a-d) between the first network device (12, 12a) and at least two different second network devices (12, 12b, 12c), said different second network devices (12, 12b, 12c) respectively providing corresponding application data (18); and/or
c2) Establishing one or more network connections (14, 14e) between at least two different second network devices (12, 12b, 12c), one or both of said different second network devices (12, 12b, 12c) providing joint application data (34).

8. The method according to any of the preceding claims, wherein the application data (18, 34) includes in step a) the plurality of data objects (20, 20a-f) and/or in step c) the one or more corresponding data objects (20, 20a-f).

9. The method according to any of the preceding claims, wherein the correlation map correlates and/or uncorrelates the plurality of data objects (20, 20a-f) based on one or both of the following:
- the application (16); and/or
- one or more layers, frames, and/or any other nature related to the application data (18) and/or the data objects (20, 20a-f).

10. A network system (10) comprising means for carrying out the method according to any of the preceding claims.

11. A network device (12, 12a, 12b, 12c), adapted for the network system (10) according to claim 10.

12. A computer program which, when the program is executed by a network device (12, 12a, 12b, 12c) in a network system (10), cause the network device (12, 12a, 12b, 12c) or the network system (10) respectively, to carry out the method of any of the claims 1 to 9.

13. A computer-readable data carrier having stored thereon the computer program of claim 12.
